# EUROPEAN PATENT APPLICATION

(11) **EP 4 040 840 A1**
(43) Date of publication of application: **10.08.2022**
(21) Application number: 19948180.5
(22) Date of filing: 30.09.2019
(51) Int. Cl.: H04W 24/10, H04W 72/04, H04W 52/02

(54) **TERMINAL AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/038653
(87) International publication number: WO 2021/064840

(57) **Abstract**

A terminal includes a communication unit configured to perform communication by using carrier aggregation in a primary cell or a primary secondary cell and a secondary cell, and a control unit configured to perform a change of an operation related to the secondary cell when a change of a communication state occurs in the primary cell, the primary secondary cell, or the secondary cell.

## Description

### Technical Field

The present invention relates to a terminal and a communication method in a radio communication system.

### Background Art

In New Radio (NR) that is a successor system of Long Term Evolution (LTE) (which is also called 5G), a technology that satisfies a large capacity system, high data transmission speed, low delay, concurrent connections of many terminals, low cost, power saving, and the like, as required conditions, has been discussed (e.g., Non-Patent Document 1).

In NR, a bandwidth part (BWP) is introduced (for example, Non-Patent Document 2). By applying the BWP, user equipment (UE) can switch bandwidth for monitoring of control signals, transmission and reception of data, and transmission and reception of control signals in a component carrier (CC). Furthermore, by configuring a different parameter set for each BWP, the parameter set can be immediately switched.

### Prior Art Document

### Non-patent Documents

Non-Patent Document 1: 3GPP TS 38.300 V15.6.0 (2019-06)
Non-Patent Document 2: 3GPP TS 38.211 V15.6.0 (2019-06)

### Summary of the Invention

### Problem to be Solved by the Invention

When a state of communication is changed, such as data is generated or the amount of data is increased, switching to a BWP suitable for the communication may be performed. However, when carrier aggregation (CA) is being applied, there is a case in which the operation cannot be immediately switched and the delay is increased depending on a state of a secondary cell (SCell).

The present invention has been made in view of the above-described point, and it is an object to perform operation-switching to follow a change in a state of communication in the radio communication system.

### Means for Solving Problem

According to a disclosed technique, a terminal is provided that includes a communication unit configured to perform communication by using carrier aggregation in a primary cell or a primary secondary cell and a secondary cell, and a control unit configured to perform a change of an operation related to the secondary cell when a change of a communication state occurs in the primary cell, the primary secondary cell, or the secondary cell.

### Effect of the Invention

According to a disclosed technique, operation-switching to follow a change in a state of communication, can be performed in a radio communication system.

### Brief Description of Drawings

FIG. 1 is a drawing illustrating a configuration example of a radio communication system according to an embodiment of the present invention;
FIG. 2 is a drawing illustrating an operation related to power saving;
FIG. 3 is a flowchart illustrating an operation example (1) of a secondary cell according to the embodiment of the present invention;
FIG. 4 is a flowchart illustrating an operation example (2) of the secondary cell according to the embodiment of the present invention;
FIG. 5 is a drawing illustrating an example of a functional configuration of a base station 10 according to the embodiment of the present invention;
FIG. 6 is a drawing illustrating an example of a functional configuration of a terminal 20 according to the embodiment of the present invention; and
FIG. 7 is a drawing illustrating an example of a hardware configuration of the base station 10 or the terminal 20 according to the embodiment of the present invention.

### Mode(S) for Carrying Out the Invention

An embodiment of the present invention will be described below with reference to the drawings. The embodiment described below is an example, and an embodiment to which the present invention can be applied is not limited to the embodiment below.

In an operation of a radio communication system of the embodiment of the present invention, an existing technique can be used appropriately. The existing technique is an existing LTE, for example. However, the existing technique is not limited to the existing LTE. The term "LTE" used in the present specification indicates a broad meaning including LTE-Advanced and a system after LTE-Advanced (e.g., NR), unless otherwise indicated.

In the following embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), which are used in the existing LTE, are used. This is for convenience of explanation, and similar signals, functions, and so on may be differently termed. In NR, the terms described above correspond to an NR-SS, an NR-PSS, an NR-SSS, an NR-PBCH, an NR-PRACH, and so on. However, "NR-" is not necessarily specified even if a signal is used for NR.

In the embodiment of the present invention, the duplexing method may be time division duplexing (TDD), frequency division duplexing (FDD), or may be another method (e.g., a flexible division duplex method).

In the embodiment of the present invention, a description that a radio parameter or the like is configured may indicate that a predetermined value is pre-configured, or may indicate that a radio parameter sent from a base station 10 or a terminal 20 is configured.

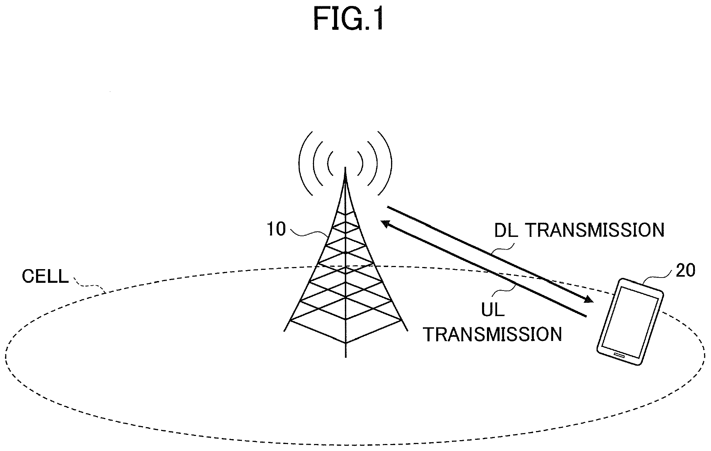

FIG. 1 is a drawing illustrating a configuration example of the radio communication system according to the embodiment of the present invention. As illustrated in FIG. 1, the radio communication system according to the embodiment of the present invention includes the base station 10 and the terminal 20. In FIG. 1, one base station 10 and one terminal 20 are illustrated, but this is an example, and multiple base stations 10 and multiple terminals 20 may exist.

The base station 10 provides one or more cells, and is a communication device that performs radio communication with the terminal 20. A physical resource of a radio signal is defined in a time domain and a frequency domain. The time domain may be defined by the number of OFDM (Orthogonal Frequency Division Multiplexing) symbols and the frequency domain may be defined by the number of subcarriers or the number of resource blocks. The base station 10 transmits a synchronization signal and system information to the terminal 20. The synchronization signal is, for example, an NR-PSS and an NR-SSS. The system information is transmitted through an NR-PBCH, for example, and is also referred to as broadcast information. As illustrated in FIG. 1, the base station 10 transmits a control signal or data by DL (downlink) to the terminal 20, and receives a control signal or data by UL (uplink) from the terminal 20. Both the base station 10 and the terminal 20 can perform beamforming to transmit and receive a signal. Both the base station 10 and the terminal 20 can apply multiple input multiple output (MIMO) communication to DL or UL. Both the base station 10 and the terminal 20 may communicate through a secondary cell (SCell) and a primary cell (PCell) by carrier aggregation (CA). Further, the terminal 20 may communicate through a primary cell of the base station 10 by a dual connectivity (DC) and through a primary secondary cell (PSCell) of another base station 10.

The terminal 20 is a communication device having a wireless communication function, such as a smartphone, a mobile phone, a tablet, a wearable terminal, and a communication module for Machine-to-Machine (M2M). As illustrated in FIG. 1, the terminal 20 receives a control signal or data by DL from the base station 10, and transmits a control signal or data in UL to the base station 10 to use various communication services provided by the wireless communication system.

In CA of NR or LTE, a state of a secondary cell is defined. In an active state, a control signal is monitored, data is transmitted and received, a control signal is transmitted and received, and related operations, such as Channel State Information (CSI) measurement and a CSI reporting, are performed. In an inactive state, a control signal is not monitored, data is not transmitted and received, a control signal is not transmitted and received, and a CSI measurement, CSI reporting, and so on are not performed.

In the LTE, in addition to the active and inactive states described above, a dormant state is defined as a state of the secondary cell. In the dormant state, monitoring of a control signal, transmission and reception of data, and transmission and reception of a control signal are not performed, but the CSI measurement and the CSI measurement are performed.

When a state of the secondary cell transitions from the inactive state to the active state, it is necessary to perform the CSI measurement and the CSI reporting after the transition. Therefore, it takes a long time to start communication after the transition, and this causes a large delay. By introducing the dormant state and transitioning to the dormant state before transitioning to the active state, the delay in transitioning to the active state can be reduced.

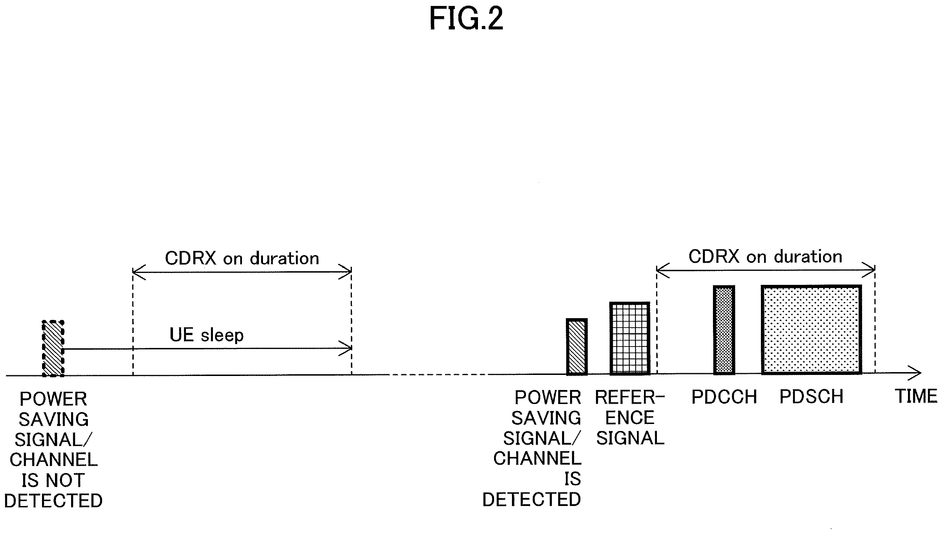

FIG. 2 is a drawing illustrating an operation related to power saving. In NR, the introduction of a power saving signal/channel (which will be also referred to as a "wakeup signal") for the purpose of reducing power consumption, has been considered. The power saving signal/channel enables the base station 10 to inform the terminal 20 of information related to a power saving operation. The power saving signal/channel may correspond to a power saving signal or may correspond to a power saving channel.

For example, as illustrated in FIG. 2, when the terminal 20 intermittently receives a control signal in a connected mode (i.e., CDRX: connected mode discontinuous reception), by receiving the power saving signal/channel before a reception duration (i.e., an on duration), it is determined whether to monitor the control signal during a subsequent on duration. The terminal 20 sleeps when the power saving signal is not detected, and the terminal 20 receives a subsequent reference signal, a PDCH, and a PDSCH when the power saving signal is detected.

A use other than the operation equivalent to the wakeup signal at the CDRX has been considered for the power saving signal/channel. For example, it can be considered to send an indication of the operation related to power saving even during a normal connected mode when the CDRX is not performed or during the on duration of the CDRX. During the normal connected mode when the CDRX is not performed or during the on duration of the CDRX, the power saving signal/channel may be a physical signal different from a signal in the operation equivalent to the wakeup signal.

The bandwidth part (BWP) has been introduced in NR. An application of the BWP enables UE to switch bandwidth in the CC for monitoring the control signal, transmitting and receiving the data, and transmitting and receiving the control signal. Further, by configuring a different set of parameters for each BWP, the parameter set can be immediately switched. When the BWP is switched, it is not required to switch frequency bands. For example, two BWPs with different values of the parameters related to power consumption reduction are prepared, and by switching these BWPs, the parameters related to power consumption reduction can be switched.

For example, for switching BWPs, when "there is no transmission/reception data (i.e., when only monitoring of control signals is performed)" and/or "traffic is low", it is assumed to use a narrow band BWP, and in a case other than the above, it is assumed to use a broad band BWP.

The narrow band BWP may also be used, for example, for monitoring the control signal or monitoring the power saving signal/channel during the on duration of the CDRX. That is, the BWPs may be switched in accordance with the CDRX or the power saving signal/channel control.

Here, in NR, a state corresponding to the dormant state is not defined as a state of the secondary cell, and only the active state and the inactive state are defined. Thus, when the state of the secondary cell transitions from the inactive state to the active state, it takes a long time to start communication after the transition because it is necessary to perform the CSI measurement and the CSI reporting after the transition, and this causes a large delay.

For example, when the CDRX is performed, the primary cell or the primary secondary cell is in the active state, the secondary cell is in the inactive state, and the wakeup is transmitted through the power saving signal/channel before the on duration, it is assumed that data has been generated, and a possibility of causing the secondary cell to transition to the active state can be considered. However, since the secondary cell is in the inactive state, the CSI measurement and CSI reporting have not been performed and the delay is increased.

For example, when the BWPs are switched, it is assumed that data has been generated or that the amount of data generated is increased. However, since the secondary cell is in the inactive state, the CSI measurement and CSI reporting have not been performed and the delay is increased.

Thus, one or more of information described in 1) to 3) below may be explicitly or implicitly indicated to the terminal 20 by a network.
1) Information indicating a change of the presence and absence of performing the CSI measurement and the CSI reporting in the inactive secondary cell may be sent from the network to the terminal 20. That is, even in the inactive secondary cell, the terminal 20 may perform the CSI measurement and CSI reporting based on the indication from the network. The above-described operation is similar to the operation in dormant state, but is performed in the inactive state.
2) Information indicating a change of the presence and absence or a configuration of performing monitoring the control signal in the inactive secondary cell may be sent from the network to the terminal 20. That is, even in the inactive secondary cell, the terminal 20 perform monitoring the control signal (PDCCH) based on the indication from the network. When the monitoring of the control signal is performed in the inactive state, a relevant configuration may differ from the configuration used when the monitoring of the control signal is performed in the active state. For example, the monitoring of the control signal may be performed in the inactive state with a period longer than the period used when the monitoring of the control signal is performed in the active state. The relevant configuration described above may be, for example, a period, the number of symbols, the number of slots, bandwidth, the number of blind decoding, an aggregation level, and so on, that are used when the monitoring of the control signal is performed, or may be another information sent by an RRC information element, such as PDCCH-Config, PDCCH-ConfigCommon, PDCCH-ConfigSIB1, or another information specified in the specification.
3) A change of the state of the secondary cell may be indicated from the network to the terminal 20. For example, a change between the active state and the inactive state may be indicated. Further, if the dormant state is also defined in the NR, a change between the active state and the dormant state and a change between the inactive state and the dormant state may be indicated. The terminal 20 in the dormant state may perform only the CSI measurement and CSI reporting, or the terminal 20 may perform the CSI measurement, the CSI reporting, and the monitoring of a specified control signal. When the monitoring of the control signal is performed in the dormant state, the relevant configuration may differ from the configuration used when the monitoring of the control signal is performed in the active state.

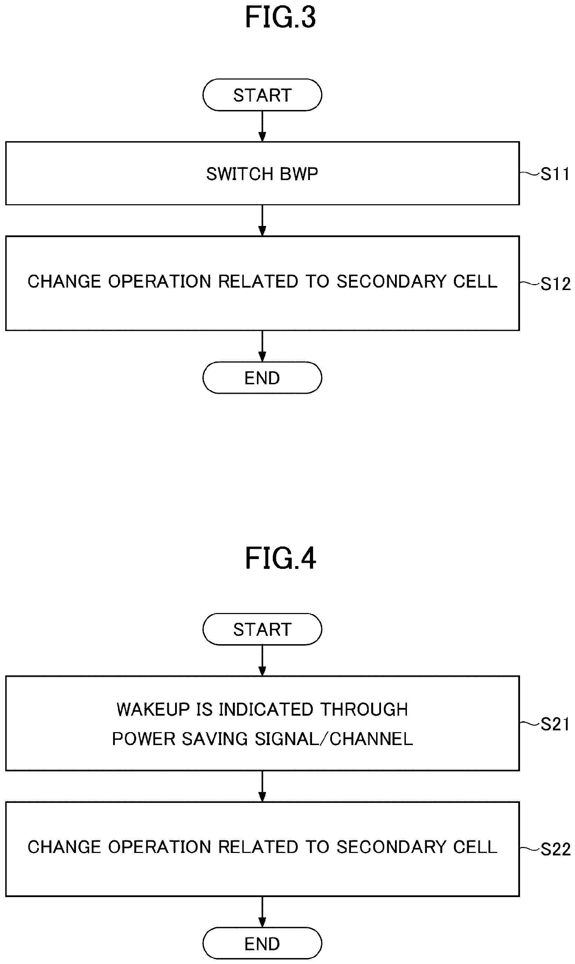

FIG. 3 is a flowchart illustrating an operation example (1) of the secondary cell according to the embodiment of the present invention. As illustrated in FIG. 3, in step S11, the terminal 20 switches the BWPs. The BWP switching may indicate a change in a communication state. Subsequently, an operation related to the secondary cell is changed (S12).

For example, by using the BWP switching in step S11 as a trigger, the presence or absence of performing the CSI measurement and CSI reporting in the inactive secondary cell may be changed in step S12. Additionally, the presence or absence, or the configuration of performing the monitoring of the control signal in the inactive secondary cell may be changed in step S12. The state of the inactive secondary cell may also be changed in step S12. The BWP switching in step S11 may be switching in the primary cell, switching in the primary secondary cell, switching in the secondary cell, or switching in another secondary cell.

For example, how the BWP switching in step S11 is associated with the change of the operation of the secondary cell in step S12 may be indicated from the network to the terminal 20, or may be previously specified in the specification. For example, if a normal BWP #1 and a BWP #2 reducing power consumption (e.g., some parameters have been changed, such as a narrow band) have been set to the terminal 20, the operation of the secondary cell may be changed as in a) and b) below.
a) When switching from the BWP #2 to the BWP #1, one or more of the following a1) to a5) may be performed.
   a1) The terminal 20 may start the CSI measurement and CSI reporting in the inactive secondary cell.
   a2) The terminal 20 may start the monitoring of the control signal in the inactive secondary cell.
   a3) The terminal 20 may change the configuration associated with the monitoring of the control signal in the inactive secondary cell.
   a4) The terminal 20 may change the state of the inactive secondary cell to the dormant state.
   a5) The terminal 20 may change the state of the inactive or dormant secondary cell to the active state.
b) When switching from the BWP #1 to the BWP #2, one or more of the following b1) to b5) may be performed.
   b1) The terminal 20 may stop the CSI measurement and CSI reporting in the inactive secondary cell.
   b2) The terminal 20 may stop the monitoring of the control signal in the inactive secondary cell.
   b3) The terminal 20 may change the configuration associated with the monitoring of the control signal in the inactive secondary cell.
   b4) The terminal 20 may change the state of the active secondary cell to the dormant state.
   b5) The terminal 20 may change the state of the active or dormant secondary cell to the active state. Further, the presence or absence of performing the CSI measurement and CSI reporting in the secondary cell whose state has been changed to the inactive state may be changed.

When multiple secondary cells are configured, a) or b) above may be applied to some or all of the secondary cells. Also, which secondary cell a) or b) above is applied to, may be indicated to the terminal 20, or, may be specified in the specification. Additionally, which secondary cell a) or b) above is applied to, may be indicated to the terminal 20, individually for each BWP before or after switching, or may be specified in the specification. Also, which secondary cell a) or b) above is applied to, may be indicated to the terminal 20, commonly between the BWP before switching and the BWP after switching, or may be specified in the specification.

FIG. 4 is a flowchart illustrating an operation example (2) of the secondary cell according to the embodiment of the present invention. As illustrated in FIG. 3, in step S21, the wakeup is indicated to the terminal 20 through the power saving signal/channel. The indication through the power saving signal/channel may indicate a change in the communication state. The indication through the power saving signal/channel may be an indication in the primary cell, the primary secondary cell, or the secondary cell. Subsequently, the operation related to the secondary cell is changed (S22). Step S21 and step S22 may be performed as in c), d), or e) below.

c) In step S21, when the wakeup is indicated to the terminal 20 through the power saving signal/channel before the on duration of the CDRX: a change in the presence or absence of performing the CSI measurement and CSI reporting in the inactive secondary cell; a change in the presence or absence of, or a change in the configuration of, performing the monitoring of the control signal in the inactive secondary cells; or a change in the state of the secondary cell, may be explicitly indicated through the power saving signal/channel. For example, they may be explicitly indicated to the terminal 20 through the power saving signal/channel as described in c1) to c6) below.

c1) The presence or absence of performing the CSI measurement and CSI reporting in the inactive secondary cell may be indicated by 1 bit.
c2) The presence or absence of performing the monitoring of the control signal in the inactive secondary cell may be indicated by 1 bit.
c3) Which configuration or configuration set, related to the monitoring of the control signal is to be used may be indicated by 1 bit or multiple bits.
c4) An instruction to change the state of the inactive secondary cell to the active or dormant state may be indicated by 1 bit. c5) An instruction to change the state of the dormant secondary cell to the active state may be indicated by 1 bit.
c6) Which state the state of the secondary cell is to be changed to, may be indicated by 2 bits.

A combination of the information of c1) to c6) above or a combination of another information and the information of c1) to c6) above, may be explicitly indicated to the terminal 20 through the power saving signal/channel.

d) In step S21, when the wakeup is indicated to the terminal 20 through the power saving signal/channel before the on duration of the CDRX, the terminal 20 may determine that: a change in the presence or absence of performing the CSI measurement and CSI reporting in the inactive secondary cell; a change in the presence or absence of, or the configuration of, performing the monitoring of the control signal in the inactive secondary cell; or a change in the state of the secondary cell, is implicitly indicated. For example, the terminal 20 may perform one or more of the operations described in d1) to d5) below.

d1) The CSI measurement and CSI reporting in the inactive secondary cell may be started.
d2) The monitoring of the control signal in the inactive secondary cell may be started.
d3) The configuration or configurations related to the monitoring of the control signal in the inactive secondary cell may be changed.
d4) The state of the inactive secondary cell may be changed to the dormant state.
d5) The state of the inactive or dormant secondary cell may be changed to the active state.

e) In step S21, when the wakeup is indicated to the terminal 20 through the power saving signal/channel before the on duration of the CDRX, the operation when the wakeup is performed on the terminal 20, may be indicated to the terminal 20 in advance, or may be specified in the specification. For example, one or more of the information described in the following e1) to e5) may be indicated to the terminal 20, or may be specified in the specification.

e1) The presence or absence of performing the CSI measurement and CSI reporting in the inactive secondary cell may be indicated or specified in the specification.
e2) The presence or absence of performing the monitoring of the control signal in the inactive secondary cell may be indicated or specified in the specification.
e3) Which configuration or configuration set related to the monitoring of the control signal is to be used, may be communicated, or specified in the specification.
e4) An instruction to change the state of the inactive secondary cell to the active or dormant state may be indicated or specified in the specification.
e5) An instruction to change the state of the dormant secondary cell to the active state may be indicated or specified in the specification.
e6) Which state the state of the secondary cell is to be changed to, may be indicated or specified in the specification.

A combination of the information of the above-described e1) to e6) or a combination of another information and the information of the above-described e1) to e6), may be indicated in advance to the terminal 20, or specified in the specification.

Here, c), d) or e) may be performed in combination.

When multiple secondary cells are configured, the above-described c), d) or e) may be applied to some or all of the secondary cells. Which secondary cell the above-described c), d) or e) is to be applied to, may be indicated to the terminal 20, or may be specified in the specification.

When the wakeup is indicated to the terminal 20 through the power-saving signal/channel before the on duration of the CDRX, and further the BWP switching is simultaneously indicated to the terminal 20: the presence or absence of performing the CSI measurement and CSI reporting in the inactive secondary cell may be changed; the presence or absence of, or the configuration of, performing the monitoring of control signal in the inactive secondary cell, may be changed; or the state of the secondary cell may be changed, in association with the BWP switching.

That is, when the wakeup is indicated to the terminal 20 through the power saving signal/channel before the on duration of the CDRX and further the BWP switching is simultaneously indicated to the terminal 20, the operation of the secondary cell may be changed as described in a) or b) above, in a manner similar to the operation by the BWP switching in step S11 illustrated in FIG. 3.

Additionally, when the BWP switching is indicated to the terminal 20 through the power saving signal/channel: the presence or absence of performing the CSI measurement and CSI reporting in the inactive secondary cell may be changed; the presence or absence of, or the configuration of, performing the monitoring of the control signal in the inactive secondary cell, may be changed; and the state of the secondary cell may be changed, in association with the BWP switching.

That is, when the BWP switching is indicated through the power saving signal/channel, the operation of the secondary cell may be changed as described in a) or b) above, in a manner similar to the operation by the BWP switching in step S11 illustrated in FIG. 3.

A case in which the wakeup is indicated to the terminal 20 through the power saving signal/channel before the on duration of the CDRX, may be excluded from, or may be included in, the case in which the BWP switching is indicated through the power saving signal/channel described above.

"CSI" in the CSI measurement and CSI reporting may include one or more of channel quality indicators (CQIs), precoding matrix indicators (PMIs), precoding type indicators (PTIs), rank indicators (RIs), layer indicators (LIs), reference signal received power (L1-RSRP), CSI-RS resource indicators (CRIs), and SS/PBCH block resource indicators (SSBRIs).

The terminal 20 may change: the presence or absence of performing the CSI measurement and CSI reporting in the inactive secondary cell; the presence or absence of, or the configuration of, performing the monitoring of the control signal in the inactive secondary cell; or the state of the inactive secondary cell, by using an indication related to cross-slot scheduling as a trigger. The indication by cross-slot scheduling may indicate a change in the communication state.

The indication related to the cross-slot scheduling may be: switching in the primary cell; switching in the primary secondary cell; switching in the secondary cell; or switching in another secondary cell. The cross-slot scheduling is scheduling of a data signal to a slot different from the slot of the control signal, and the indication related to the cross-slot scheduling may be an indication of switching between the same-slot scheduling and the cross-slot scheduling, or an indication that the minimum value of K 0 that can be configured is greater than or equal to one. The value of K 0 is a slot offset for data signal scheduling that is indicated through the control signal.

The above-described indication related to the cross-slot scheduling may be indicated through the BWP switching, through the power saving signal/channel, or through another control signal or signaling, such as L1, MAC, or RRC.

The terminal 20 may indicate, to the network, a flag indicating whether to apply a change in each operation in the secondary cell described above. For example, the flag may be a UE capability.

According to the embodiment described above, the terminal 20 can reduce the delay associated with the switching of the operation by switching the operation of the secondary cell in response to a change in the communication state.

That is, in the radio communication system, it is possible to perform operation-switching that follows a change in the communication state.

### (Device configuration)

Next, an example of the functional configurations of the base station 10 and the terminal 20 performing the processes and operations described above, will be described. The base station 10 and the terminal 20 include functions for performing the embodiments described above. However, each of the base station 10 and the terminal 20 may include only a part of functions in the embodiments.

### <Base station 10>

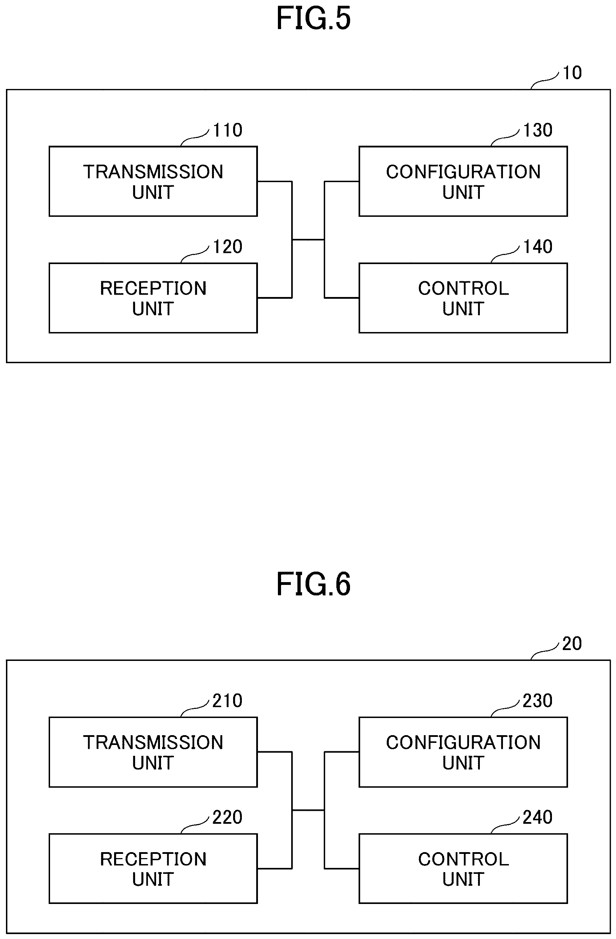

FIG. 5 is a drawing illustrating an example of a functional configuration of the base station 10 according to the embodiment of the present invention. As illustrated in FIG. 5, the base station 10 includes a transmission unit 110, a reception unit 120, a configuration unit 130, and a control unit 140. The functional configuration illustrated in FIG. 5 is merely an example. The functional division and names of the functional units are not limited as long as the operations according to the embodiment of the present invention can be performed.

The transmission unit 110 includes a function to generate a signal to be transmitted to the terminal 20, and a function to transmit the signal wirelessly. The transmission unit 110 transmits a message between network nodes to another network node. The reception unit 120 includes a function to receive various types of signals transmitted from the terminal 20, and a function to obtain information about upper layers from the received signal, for example. The transmission unit 110 includes a function to transmit an NR-PSS, an NR-SSS, an NR-PBCH, a DL/UL control signal, a DL/UL data signal, and the like to the terminal 20. The reception unit 120 receives a message between network nodes from another network node.

The configuration unit 130 stores pre-configured configuration information, and various configuration information to be transmitted to the terminal 20. The contents of the configuration information may include a BWP configuration of the terminal 20, a configuration of the power saving signal/channel, and information concerning a configuration of the secondary cell, for example.

The control unit 140 performs control of the secondary cell, the BWP, and the power saving signal transmission as described in the embodiment. Functional units concerning signal transmission in the control unit 140 may be incorporated in the transmission unit 110, and functional units concerning signal reception in the control unit 140 may be incorporated in the reception unit 120.

### <Terminal 20>

FIG. 6 is a drawing illustrating an example of a functional configuration of the terminal 20 according to the embodiment of the present invention. As illustrated in FIG. 6, the terminal 20 includes a transmission unit 210, a reception unit 220, a configuration unit 230, and a control unit 240. The functional configuration illustrated in FIG. 6 is merely an example. The functional division and names of the functional units are not limited as long as the operations according to the embodiment of the present invention can be performed.

The transmission unit 210 generates a transmission signal from data to be transmitted, and transmits the transmission signal wirelessly. The reception unit 220 receives various types of signals wirelessly, and obtains a signal of an upper layer from a physical layer of the received signal. The reception unit 220 includes a function to receive an NR-PSS, an NR-SSS, an NR-PBCH, a DL/UL/SL control signal, and the like transmitted from the base station 10. For example, the transmission unit 210 transmits a physical sidelink control channel (PSCCH), a physical sidelink control channel (PSSCH), a physical sidelink discovery channel (PSDCH), a physical sidelink broadcast channel (PSBCH) or the like to another terminal 20, as D2D communication, and the reception unit 220 receives a PSCCH, a PSSCH, a PSDCH, a PSBCH, or the like from another terminal 20.

The configuration unit 230 stores various configuration information received by the reception unit 220 from the base station 10. The configuration unit 230 also stores pre-configured configuration information. Contents of the configuration information include a BWP configuration of the terminal 20, a configuration of the power saving signal/channel, and a configuration of the secondary cell, for example.

The control unit 240 performs control of the secondary cell, the BWP, and the power saving signal transmission as described in the embodiment. Functional units concerning signal transmission in the control unit 240 may be incorporated in the transmission unit 210, and functional units concerning signal reception in the control unit 240 may be incorporated in the reception unit 220.

### <Hardware configuration>

The block diagrams used to describe the embodiment above (which are FIG. 5 and FIG. 6) illustrate blocks of functional units. The functional blocks (components) are implemented by any combination of hardware, software, or both. A means for implementing each functional block is not particularly limited. That is, each functional block may be implemented by one device in which components are physically or logically coupled, or by multiple devices that are two or more devices physically or logically separated from each other and connected directly or indirectly (with a wire connection or a wireless connection, for example). A functional block may be implemented by a combination of one device described above or multiple devices described above, and software.

A function includes determining, deciding, judging, calculating, computing, processing, deriving, investigating, looking up, ascertaining, receiving, transmitting, outputting, accessing, resolving, selecting, choosing, establishing, comparing, assuming, expecting, regarding, broadcasting, notifying, communicating, forwarding, configuring, reconfiguring, allocating, mapping, and assigning, but is not limited to these. A functional block (component) that functions transmission is called a transmitting unit or a transmission unit, for example. As described above, a means for implementing a transmitting unit and a transmission unit is not limited.

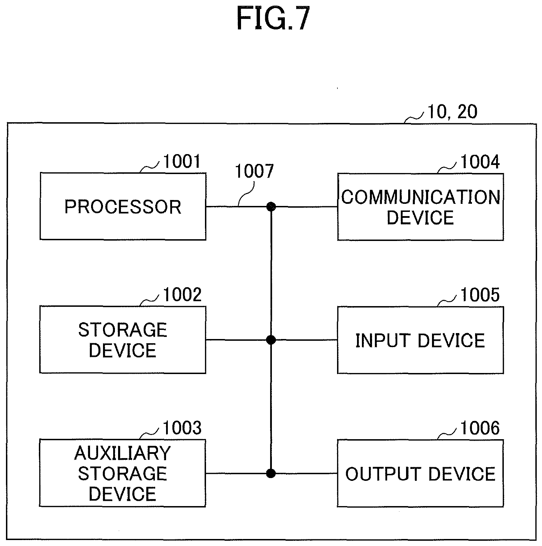

The base station 10, the terminal 20, or the like according to an embodiment of the present disclosure may function as a computer that performs a process of a radio communication method of the present disclosure, for example. FIG. 7 is a diagram illustrating an example of a hardware configuration of the base station 10 and the terminal 20 according to an embodiment of the present disclosure. The base station 10 and the terminal 20 described above may be configured as a computer device that physically includes a processor 1001, a storage device 1002, an auxiliary storage device 1003, a communication device 1004, an input device 1005, an output device 1006, and a bus 1007.

In the following description, the word "device" may be understood as referring to a circuit, an apparatus, a unit, or the like. The hardware configurations of the base station 10 and the terminal 20 may include one or more devices illustrated in the drawing or may not include some devices.

Each function of the base station 10 and the terminal 20 is implemented by the following process: predetermined software (program) is loaded into hardware such as the processor 1001 and the storage device 1002, and the processor 1001 performs an operation to control communication of the communication device 1004 and at least one of reading and writing of data in the storage device 1002 and the auxiliary storage device 1003.

The processor 1001 operates, for example, an operating system to control an overall operation of the computer. The processor 1001 may be a central processing unit (CPU) including, for example, an interface with peripheral equipment, a control device, an arithmetic device, and a register. For example, the control unit 140, the control unit 240, and so on described above may be implemented by the processor 1001.

The processor 1001 loads a program (program code), a software module, data, or the like from at least one of the auxiliary storage device 1003 and the communication device 1004 into the storage device 1002 and performs various types of processes according to the program, the software module, the data, or the like. A program that causes a computer to perform at least some of the operations described in the embodiment above may be used. For example, the control unit 140 of the base station 10 illustrated in FIG. 5 may be implemented by a control program that is stored in the storage device 1002 and that is executed by the processor 1001. For example, the control unit 240 of the terminal 20 illustrated in FIG. 6 may be implemented by a control program that is stored in the storage device 1002 and that is executed by the processor 1001. It is described that the various processes described above are performed by one processor 1001; however, the processes may be simultaneously or sequentially performed by two or more processors 1001. The processor 1001 may be implemented by one or more chips. The program may be transmitted over a network through a telecommunication line.

The storage device 1002 is a computer-readable recording medium, and may include, for example, at least one of a read only memory (ROM), an erasable programmable ROM (EPROM), an electrically erasable programmable ROM (EEPROM), and a random access memory (RAM). The storage device 1002 may be also referred to as, for example, a register, a cache, or a main memory (a main storage device). The storage device 1002 can store, for example, an executable program (program code) and a software module so as to perform a communication method according to the embodiment of the disclosure.

The auxiliary storage device 1003 is a computer-readable recording medium, and may include, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage medium described above may be, for example, a database, a server, and other suitable media including at least one of the storage device 1002 and the auxiliary storage device 1003.

The communication device 1004 is hardware (a transmission and reception device) for communicating with a computer through at least one of a wired network and a wireless network, and is also referred to as, for example, a network device, a network controller, a network card, or a communication module. In order to achieve at least one of a frequency division duplex (FDD) and a time division duplex (TDD), for example, the communication device 1004 may include a highfrequency switch, a duplexer, a filter, and a frequency synthesizer. For example, a transmission and receiving antenna, an amplifier unit, a transmission and receiving unit, a transmission channel interface and the like may be implemented by the communication device 1004. A transmission and receiving unit may be implemented by being physically or logically separated into a transmission unit and a reception unit.

The input device 1005 is an input unit that receives an input from the outside (for example, a keyboard, a mouse, a microphone, a switch, a button, or a sensor). The output device 1006 is an output unit that performs an output process to the outside (for example, a display, a speaker, or an LED lamp). The input device 1005 and the output device 1006 may be integrated into a single device (for example, a touch panel).

Devices such as the processor 1001 and the storage device 1002 are connected to each other through the bus 1007 for communicating information. The bus 1007 may be a single bus or the devices may be connected to each other by different buses.

The base station 10 and the terminal 20 may include hardware such as a microprocessor, a digital signal processor (DSP), an application specific integrated circuit (ASIC), a programmable logic device (PLD), and a field programmable gate array (FPGA), and some or all of the functional blocks may be implemented by the hardware. For example, the processor 1001 may be implemented by at least one of these hardware components.

### (Summary of the embodiment)

As described above, according to the embodiment of the present invention, a terminal including a communication unit configured to perform communication by using carrier aggregation in a primary cell or a primary secondary cell and a secondary cell, and a control unit configured to perform a change of an operation of the secondary cell when a change in a communication state occurs in the primary cell, the primary secondary cell, or the secondary cell, is provided.

With the above-described configuration, the terminal 20 can reduce the delay associated with operation-switching by switching operations of the secondary cell in response to a change in the communication state. That is, in the radio communication system, it is possible to perform operation-switching that follows a change in the communication state.

The change in the communication state may be bandwidth part (BWP) switch. With such a configuration, the terminal 20 can reduce the delay associated with the operation-switching by switching the operations of the secondary cell in response to the BWP switching.

The change in the operation related to the secondary cell may be one or more of the changes in operation 1) to 5), as described below.
1) Starting or stopping the CSI measurement and CSI reporting in the inactive secondary cell
2) Starting or stopping the monitoring of the control signal in the inactive secondary cell
3) Changing a configuration related to the monitoring of the control signal in the inactive secondary cells
4) Changing the state of the inactive secondary to the dormant state
5) Changing the state of the inactive or dormant secondary cell to the active state

With such a configuration, the terminal 20 can reduce the delay associated with the operation-switching by switching the operations of the secondary cell in response to the BWP switching.

The change in the communication state may be an activation indication by the power saving signal. With such a configuration, the terminal 20 can reduce the delay associated with the operation-switching by switching the operations of the secondary cell in response to the activation indication by the power saving signal.

The activation indication by the power saving signal may include information of one or more of 1) to 6) described below.
1) Presence or absence of performing the CSI measurement and CSI reporting in inactive secondary cell
2) Presence or absence of performing the monitoring of the control signal in the inactive secondary cell
3) Information indicating which configuration or configuration set related to the monitoring of the control signal is to be used
4) An instruction to change the state of the inactive secondary cell to the active or dormant state
5) An instruction to change the state of the dormant secondary cell to the active state
6) Information indicating to which state the state of the secondary cell is changed

With such a configuration, the terminal 20 can reduce the delay associated with the operation-switching by switching the operations of the secondary cell in response to the activation indication by the power saving signal.

The change in the communication state may be an indication of the cross-slot scheduling. With such a configuration, the terminal 20 can reduce the delay associated with the operation-switching by switching the operations of the secondary cell in response to the indication of the cross-slot scheduling.

The change of the operation of the secondary cell may be one or more of 1) to 4) described below.
1) Presence or absence of performing the CSI measurement and CSI reporting in the inactive secondary cell
2) Presence or absence of performing the monitoring of the control signal in the inactive secondary cell
3) Changing the configuration of the monitoring of the control signal in the inactive secondary cell
4) Changing the state of the inactive secondary cell With such a configuration, the terminal 20 can reduce the delay associated with the operation-switching by switching the operations of the secondary cell in response to the indication of the cross-slot scheduling.

According to the embodiment of the present invention, a communication method performed by a terminal, including a communication step of performing communication by using carrier aggregation in a primary cell or a primary secondary cell, and a secondary cell, and a control step of changing an operation related to the secondary cell when a change in a communication state occurs in the primary cell, the primary secondary cell, or the secondary cell, is provided.

With the above-described configuration, the terminal 20 can reduce the delay associated with the operation-switching by switching the operations of the secondary cell in response to a change in the communication state. That is, in the radio communication system, it is possible to perform the operation-switching that follows the change in the communication state.

### (Supplementary explanation of the embodiment)

The embodiment of the present invention has been described above. However, the disclosed invention is not limited to the embodiment and it will be understood by those skilled in the art that various variations, modifications, alterations, substitutions, and so on can be made. Specific numerical examples are used for the description to facilitate the understanding of the invention. However, the numerical values are merely examples and any appropriate values may be used, unless otherwise stated. The classification of the sections in the description above is not essential in the invention and matters described in two or more sections may be combined and used, if necessary. Matters described in one section may be applied to matters described in another section (unless a contradiction arises). The boundaries between the functional units or the processing units in the functional block diagram do not necessarily correspond to the boundaries between physical components. The operation of a plurality of functional units may be physically performed by one component. Alternatively, the operation of one functional unit may be physically performed by a plurality of components. In the procedures described in the embodiment, the order of the processes may be changed unless a contradiction arises. For convenience of explanation of the processes, the base station 10 and the terminal 20 have been described with reference to the functional block diagrams. However, the devices may be implemented by hardware, software, or a combination thereof. Each of the software that is operated by the processor included in the base station 10 according to the embodiment of the present invention and the software that is operated by the processor included in the terminal 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, and other suitable storage media.

The transmission of information is not limited to the aspects/embodiments described in the disclosure and may be performed by other means. For example, the transmission of information may be performed by physical layer signaling (for example, downlink control information (DCI) and uplink control information (UCI)), upper layer signaling (for example, radio resource control (RRC) signaling, medium access control (MAC) signaling, or broadcast information (a master information block (MIB) and a system information block (SIB)), another signal, or a combination thereof. The RRC signaling may be also referred to as an RRC message and may be, for example, an RRC connection setup message or an RRC connection reconfiguration message.

Each aspect/embodiment described in the disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using other suitable systems, and a next-generation system that has functionality enhanced based on these systems. In addition, each aspect/embodiment described in the disclosure may be applied to combined systems (for example, a combination of at least one of LTE and LTE-A, and 5G).

In a processing order, sequence, flow chart, and so on of each aspect/embodiment described in the specification, the order may be changed unless a contradiction arises. For example, a means described in the disclosure indicates elements of various steps by using an exemplary order, and is not limited to a specific order that is indicated.

In the specification, a specific operation performed by the base station 10 may be performed by an upper node of the base station. In a network having one or a plurality of network nodes including the base station 10, it is clearly understood that various operations performed for communication with the terminal 20 can be performed by at least one of the base station 10 and a network node other than the base station 10 (for example, an MME or an S-GW are included, but not limited to these). In the description above, one network node other than the base station 10 is described as an example, but other network node may be a combination of a plurality of other network nodes (for example, an MME and an S-GW).

Information, a signal or the like described in the disclosure can be output from an upper layer (or a lower layer) to a lower layer (or an upper layer), and may be input or output through a plurality of network nodes.

The input or output information or the like may be stored in a specific location (for example, a memory) or may be managed in a management table. The input or output information or the like may be overwritten, updated, or edited. The output information or the like may be deleted. The input information or the like may be transmitted to another device.

Determination in the disclosure may be made based on a value represented by 1 bit (0 or 1), may be made based on a true or false value (boolean: true or false), or may be made based on comparison with a numerical value (for example, comparison with a predetermined value).

Regardless of the fact that software is referred to as software, firmware, middleware, a microcode, a hardware description language, or another name, the software is broadly interpreted to include an instruction, an instruction set, a code, a code segment, a program code, a program, a sub-program, a software module, an application, a software application, a software package, a routine, a subroutine, an object, an executable file, an execution thread, a procedure, a function, or the like.

Software, an instruction, information, or the like may be transmitted or received via a transmission medium. For example, when software is transmitted from a website, a server, or another remote source using at least one of a wired technology (for example, a coaxial cable, an optical cable, a twisted pair, and a digital subscriber line (DSL)) and a wireless technology (for example, an infrared ray, and microwaves), at least one of the wired technology and the wireless technology is included in the definition of a transmission medium.

Information, a signal, and the like described in the disclosure may be represented by using any of various technologies. For example, data, an instruction, a command, information, a signal, a bit, a symbol, a chip, and the like that can be mentioned throughout the description above may be represented by a voltage, a current, an electromagnetic wave, a magnetic field or a magnetic particle, an optical field or a photon, or any combination thereof.

The terms described in the disclosure and terms necessary to understand the disclosure may be replaced with terms that have same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the disclosure are interchangeably used.

Information, a parameter, and the like described in the disclosure may be represented by using an absolute value, a relative value from a predetermined value, or another corresponding information. For example, a radio resource may be indicated by an index.

Names used for parameters described above are not limited in any respect. Further, a numerical expression or the like in which the parameters are used can be different from the numerical expression disclosed explicitly in the disclosure. Since various channels (for example, a PUCCH and a PDCCH) and information elements can be identified by any suitable names, various names allocated to the various channels and the information elements are not limited in any respect.

In the disclosure, the terms "base station (BS)", "wireless base station", "base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be interchangeably used. A base station may be referred to as a macro cell, a small cell, a femtocell, a picocell, or the like.

A base station can accommodate one or more (for example, three) cells. When a base station accommodates a plurality of cells, an entire coverage area of the base station can be divided into a plurality of small areas, and in each small area, a communication service can be provided through a base station subsystem (for example, a small indoor base station remote radio head (RRH)). The term "cell" or "sector" refers to a part or whole of the coverage area in which at least one of the base station and the base station subsystem provides a communication service.

In the disclosure, the terms "mobile station (MS)", "user terminal", "user equipment (UE)", and "terminal" can be interchangeably used.

In some cases, a mobile station is referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or any other suitable term by those skilled in the art.

At least one of a base station and a mobile station may be referred to as a transmission device, a receiving device, a communication device, and the like. At least one of a base station and a mobile station may be a device installed in a mobile object or a mobile object itself. The mobile object may be a vehicle (for example, a car and an airplane), may be an unmanned mobile object (for example, a drone and a self-driving car), and may be a robot (manned or unmanned). At least one of a base station and a mobile station includes a device that does not necessarily move at a communication operation. For example, at least one of a base station and a mobile station may be an Internet of Things (IoT) device such as a sensor.

The base station in the disclosure may be referred to as a user terminal. For example, each aspect/embodiment described in the disclosure may be applied to a configuration in which communication between a base station and a user terminal is replaced with communication between a plurality of terminal 20 (which may be referred to as Device-to-Device (D2D) and Vehicle-to-Everything (V2X), for example). In this case, the terminal 20 may include a function included in the base station 10 described above. Words "uplink" and "downlink" may be referred to as words for terminal-to-terminal communication (for example, "side"). For example, an uplink channel, a downlink channel, and the like may be referred to as a side channel.

Similarly, the user terminal in the disclosure may be referred to as a base station. In this case, the base station may include a function included in the user terminal described above.

The terms "determining" and "deciding" used in the disclosure may include various operations. The terms "determining" and "deciding" can include, for example, "determination" and "decision" for judging, calculating, computing, processing, deriving, investigating, looking-up (search and inquiry) (for example, looking-up in a table, a database, or another data structure), and ascertaining operations. In addition, the terms "determining" and "deciding" can include "determination" and "decision" for receiving (for example, receiving information), transmitting (for example, transmitting information), input, output, and accessing (for example, accessing data in a memory) operations. The terms "determining" and "deciding" can include "determination" and "decision" for resolving, selecting, choosing, establishing, and comparing operations. That is, the terms "determining" and "deciding" can include "determination" and "decision" for any operation. In addition, the term "determination" (or "deciding") may be referred to as, for example, "assuming", "expecting", and "considering".

The terms "connected" and "coupled", or all variations thereof indicate any direct or indirect connection or coupling between two or more elements, and can include existence of one or more intermediate elements between two mutually "connected" or "coupled" elements. The coupling or connection between elements may be physical, logical or in combinations thereof. The term "connection" may be referred to as "access" for example. When "connected" or "coupled" is used in the disclosure, it can be considered that two elements are mutually "connected" or "coupled", for example, with use of one or more electric wires, cables, print electric connections, or any combination thereof, and as several non-limiting and non-comprehensive examples, with use of electromagnetic energy or the like having a wavelength of a radio frequency domain, a microwave domain, and an optical (both visible and invisible) domain.

A reference signal can be omitted as a RS and may be referred to as a pilot depending on an applied standard.

The description "based on" used in the disclosure does not indicate "only based on" unless otherwise described. In other words, the description "based on" indicates both "only based on" and "at least based on".

Any reference to elements with use of terms "first," "second," and the like used in the disclosure does not limit the amount or the order of the elements in general. These terms can be used in the disclosure as a convenient method to distinguish two or more elements from each other. Accordingly, reference to first and second elements does not indicate that only two elements are used or the first element has to be prior to the second element in some ways.

The term "means" in a configuration of each device described above may be replaced with "unit", "circuit", "device", or the like.

When the terms "include" and "including" and the modifications thereof are used in the disclosure, these terms are intended to be inclusive, similarly as the term "comprising". In addition, the term "or" used in the disclosure is intended not to be an exclusive OR.

A radio frame may be formed by one or more frames in the time domain. Each of one or more frames in the time domain may be also referred to as a "subframe". Further, the subframe may be formed by one or more slots in the time domain. The subframe may be a fixed time length (for example, 1 ms) that is independent of a numerology.

The numerology may be a communication parameter which is applied to at least one of transmission and reception of a signal or a channel. A numerology may indicate, for example, at least one of a subcarrier spacing, a bandwidth, a symbol length, a cyclic prefix length, a transmission time interval, the number of symbols per a TTI, a radio frame configuration, a specific filtering process performed by a transceiver in the frequency domain, a specific windowing process performed by a transceiver in the time domain.

A slot may be formed by one or more symbols (orthogonal frequency division multiplexing (OFDM) symbols, a single carrier frequency division multiple access (SC-FDMA) symbols, or the like) in the time domain. A slot may be a time unit based on a numerology.

A slot may include a plurality of mini slots. Each mini slot may be formed by one or more symbols in the time domain. A mini slot may be referred to as a sub-slot. A mini slot may be formed by a smaller number of symbols than a slot. A PDSCH (or PUSCH) transmitted in a time unit that is larger than a mini slot may be referred to as a PDSCH (or PUSCH) mapping type A. A PDSCH (or PUSCH) transmitted by using a mini slot may be referred to as a PDSCH (or PUSCH) mapping type B.

Each of the radio frame, the subframe, the slot, and the symbol represents a time unit in which a signal is transmitted. For the radio frame, the subframe, the slot, the mini slot, and the symbol, different corresponding names may be used.

For example, one subframe may be referred to as a transmission time interval (TTI), a plurality of consecutive subframes may be referred to as a TTI, and one slot or one mini slot may be referred to as a TTI. Thus, at least one of a subframe and a TTI may be a subframe of the existing LTE (1 ms), may be a shorter duration than 1 ms (for example, 1 to 13 symbols, or may be a longer duration than 1 ms. A unit representing a TTI may be called "slot" or "mini slot", for example, instead of "subframe".

A TTI indicates, for example, a minimum time unit of scheduling in radio communication. In an LTE system, for example, a base station performs scheduling per a TTI to allocate a radio resource (a frequency bandwidth, transmission power, or the like which can be used by each terminal 20) to each terminal 20. The definition of a TTI is not limited to this.

A TTI may be a transmission time unit of a channel coding data packet (a transport block), a code block, a code word, and the like, and may be a processing unit of scheduling, link adaptation, and the like. When a TTI is given, a time section (for example, the number of symbols) to which a transport block, a code block, a code word, or the like is actually mapped, may be shorter than the TTI.

When one slot or one mini slot is called a TTI, one or more TTIs (that is, one or more slots or mini slots) may be a minimum time unit of scheduling. The number of slots (or mini slots) included in the minimum time unit of scheduling may be controlled.

A TTI with 1 ms time length may be referred to as a normal TTI (a TTI of LTE Rel. 8-12), a normal TTI, a long TTI, a normal subframe, a long subframe, a slot, and the like. A TTI shorter than a normal TTI may be referred to as a shortened TTI, a short TTI, a partial TTI (or a fractional TTI), a shortened subframe, a short subframe, a mini slot, a sub-slot, a slot, and the like.

A long TTI (for example, a normal TTI or a subframe) may be replaced with a TTI having more than 1 ms time length, and a short TTI (for example, a shortened TTI) may be replaced with a TTI having TTI length that is shorter than a long TTI and longer or equal to 1 ms.

A resource block (RB) is a resource allocation unit in the time domain and the frequency domain and may include one or more consecutive subcarriers in the frequency domain. The number of subcarriers included in an RB may be the same regardless of a numerology, and may be 12 for example. The number of subcarriers included in an RB may be determined based on a numerology.

The time domain of the resource block may include one or more symbols, and may be a length of one slot, one mini slot, one subframe, or one TTI. Each of one TTI, one subframe and the like may be formed by one or more resource blocks.

One or more RBs may be referred to as a physical RB (PRB), a sub-carrier group (SCG), a resource element group (REG), a PRB pair, an RB pair, and the like.

A resource block may be formed by one or more resource elements. For example, 1 RE may be a radio resource area for one sub-carrier and one symbol.

A bandwidth part (which may be referred to as a part bandwidth, for example) may represent a subset of a consecutive common resource blocks (common RB) for a numerology in a carrier. A common RB may be determined by an index of an RB based on a common reference point of the carrier. A PRB may be defined by a BWP and may be numbered in the BWP.

A BWP may include a UL BWP and DL BWP. One or more BWPs may be configured in one carrier to UE.

At least one configured BWP may be active, and UE does not have to assume transmission and reception of a predetermined signal/channel outside of the active BWP. Terms "cell" and "carrier" in the disclosure may be referred to as "BWP".

The structures of the radio frame, the sub frame, the slot, the mini slot, the symbol, and the like described above are merely examples. For example, the number of subframes included in the radio frame, the number of slots per a subframe or a radio frame, the number of mini slots included in the slot, the number of symbols and RBs included in the slot or the mini slot, the number of subcarriers included in the RB, and also the number of symbols in the TTI, a symbol length, and a cyclic prefix (CP) length can be modified in any manner.

In the disclosure, for example, when an article, such as "a", "an", or "the", in English is added by translation, noun followed by the article may include the meaning of the plural in the disclosure.

In the disclosure, the term "A and B are different" may indicate "A and B are different from each other". The term may also indicate "each of A and B is different from C". The terms "separated", "combined, and the like may be similarly interpreted.

The aspects/embodiments described in the disclosure may be individually used, may be combined, or may be switched during execution. In addition, transmission of predetermined information (for example, transmission of "being X") is not limited to being performed explicitly, but may be performed implicitly (for example, the transmission of the predetermined information is not performed).

In the disclosure, the transmission unit 210 and the reception unit 220 is an example of a communication unit. The wakeup is an example of activation.

The disclosure has been described in detail above. It will be apparent to those skilled in the art that the disclosure is not limited to the embodiments described in the disclosure. Various modifications and changes can be made, without departing from the scope and spirit of the disclosure described in the claims. Therefore, the description in the disclosure is made for illustrative purposes and does not have any restrictive meaning to the disclosure.

### Description of Reference Signs

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a communication unit configured to perform communication by using carrier aggregation in
a primary cell or a primary secondary cell and
a secondary cell; and
a control unit configured to perform a change of an operation related to the secondary cell when a change of a communication state occurs in the primary cell, the primary secondary cell, or the secondary cell.

2. The terminal as claimed in claim 1,
wherein the change of the communication state is bandwidth part (BWP) switching.

3. The terminal as claimed in claim 2,
wherein the change of the operation related to the secondary cell is one or more of 1) to 5) below:
1) starting or stopping a CSI measurement and CSI reporting in the secondary cell in an inactive state;
2) starting or stopping monitoring of a control signal in the secondary cell in the inactive state;
3) changing a configuration related to the monitoring of the control signal in the secondary cell in the inactive state;
4) changing a state of the secondary cell in the inactive state to a dormant state; and
5) changing the state of the secondary cell in the inactive state or the dormant state to an active state.

4. The terminal as claimed in claim 1,
wherein the change of the communication state is an indication of activation by a power saving signal.

5. The terminal as claimed in claim 4,
wherein the indication of the activation by the power saving signal includes one or more information items of 1) to 6) below:
1) presence or absence of performing a CSI measurement and CSI reporting in the secondary cell in an inactive state;
2) presence or absence of performing monitoring of a control signal in the secondary cell in the inactive state;
3) information indicating which configuration or configuration set related to the monitoring of the control signal is to be used;
4) an instruction to change a state of the secondary cell in the inactive state to an active state or a dormant state;
5) an instruction to change the state of the secondary cell in the dormant state to the active state; and
6) information indicating to which state the state of the secondary cell is changed.

6. The terminal as claimed in claim 1,
wherein the change of the communication state is an indication of cross-slot scheduling.

7. The terminal as claimed in claim 6,
wherein the change of the operation related to the secondary cell is one or more of 1) to 4) below:
1) presence or absence of performing a CSI measurement and CSI reporting in the secondary cell in an inactive state;
2) presence or absence of performing monitoring of a control signal in the secondary cell in the inactive state;
3) changing a configuration of the monitoring of the control signal in the secondary cell in the inactive state; and
4) changing a state of the secondary cell in the inactive state.

8. A communication method performed by a terminal, the communication method comprising:
performing communication by using carrier aggregation in a primary cell or a primary secondary cell and a secondary cell; and
performing a change of an operation related to the secondary cell when a change of a communication state occurs in the primary cell, the primary secondary cell, or the secondary cell.
